Europäisches Patentamt

European Patent Office

Office européen des brevets

(11) Publication number: **0 096 336**
**B1**

## EUROPEAN PATENT SPECIFICATION

(45) Date of publication of patent specification: **09.12.87**

(21) Application number: **83105373.1**

(22) Date of filing: **31.05.83**

(51) Int. Cl.⁴: **B 65 B 31/02, B 65 B 55/02**

(54) Apparatus for filling containers in a sterile environment.

(30) Priority: **09.06.82 IT 345382**

(43) Date of publication of application:
**21.12.83 Bulletin 83/51**

(45) Publication of the grant of the patent:
**09.12.87 Bulletin 87/50**

(84) Designated Contracting States:
**AT BE CH DE FR GB LI LU NL SE**

(56) References cited:
**DE-C- 567 510**
**US-A-2 519 353**
**US-A-3 477 192**
**US-A-3 820 300**

(73) Proprietor: **ZANASI S.p.A.**
**Via 1e Maggio 14**
**I-40064 Ozzano dell' Emilia (Bologna) (IT)**

(72) Inventor: **Farneti, Arrigo**
**73/a, Via Andrea Costa**
**I-40100 Bologna (IT)**

(74) Representative: **Porsia, Dino, Dr. et al**
**c/o Succ. Ing. Fischetti & Weber Via Caffaro 3**
**I-16124 Genova (IT)**

Courier Press, Leamington Spa, England.

EP 0 096 336 B1

## Description

This invention relates to an apparatus for filling automatically and in a sterile environment, bottles or other containers with pharmaceutical products or the like.

From US—A—3 477 192 it is known an apparatus of the above mentioned type, in which the bottles are moved at the interior of a hood-shaped chamber provided with inlet and outlet openings for the inlet and the outlet of the said bottles. At the interior of the said chamber there is created an atmosphere of protective inert gas, which gas is introduced into the hood-shaped chamber through a side wall extending along the whole length of the path of travel of the bottles, and provided with small openings for allowing the passage of said gas without creating turbulence.

From US—A—3 820 300 it is known an apparatus for producing sterile packages in which the products are passed inside a sterile tunnel at both longitudinal sides of which there are arranged spray nozzles for spraying sterile air and a disinfectant, from both sides, against the products travelling inside the tunnel.

According to the present invention, an apparatus for filling automatically and in a sterile environment, bottles or other containers with a pharmaceutical product or the like, comprises an in-line machine wherein the bottles are moved in a single row on a rectilinear path of travel along which they are stopped cyclically by suitable means, firstly at one or more stations for admitting doses of product thereinto and subsequently at least at a sealing station, said stations for forming and dispensing the doses of product being preferably of rotary type and having an axis which is parallel to the longitudinal axis of the path of travel of the bottles. The apparatus further comprises a parallelepipedal transparent hood with side walls which are vertical and parallel to the imaginary plane containing the longitudinal axis of the conveyor for the bottles, said hood being formed with inlet and outlet openings for the bottles and being provided on its side walls with manifolds including perforated diffusion surfaces co-extensive with the entire length of said walls. The apparatus according to the invention is characterized by the fact that one of said manifolds is connected to a source for admitting suitably purified and de-humidified air into the hood, and the other is connected to a suction source of such characteristics whereby the interior of the hood shall be traversed by an air stream having a laminar flow that hits the bottles perpendicularly and submits them to a thorough and continuous scavenging action to prevent any undesired particle from falling thereinto.

Further features of the apparatus according to the invention are listed in the dependent claim 2 to 7.

The characteristics of the apparatus according to the invention and the advantages resulting therefrom will be apparent from the following description of a preferred embodiment thereof, made with reference to the attached drawings, in which:

Figures 1 and 2 are a side elevational view and a top plan view, respectively, of an improved filling machine according to the invention;

Figure 3 is a diagrammatic cross-sectional view on the line III—III of Figure 2, showing further details of the machine;

Figure 4 is a diagrammatic view of the installation for conditioning the air in the hood enclosing the operating elements of the filling apparatus of the preceding Figures.

At present, in order to fill the bottles automatically and in a sterile environment, automatic machines of any type, and also of rotary type, are used and are located in a sterile room and are usually provided with a hood of transparent material to protect the operating elements thereof; a suitable equipment will condition the air and circulate the same through the hood to maintain therein a suitably de-humidified and purified atmosphere.

Exhaustive researches carried out by the applicant have shown that in order to package a pharmaceutical product in sterile conditions, a type of packaging or filling machine must be used that, for the reasons mentioned above, cannot be of rotary type, and must be preferably of in-line type and such as to present a minimum part of its operating elements above the path of travel of the bottles, thereby minimizing the polluting particles liable to detach from said operating elements and get into the bottles.

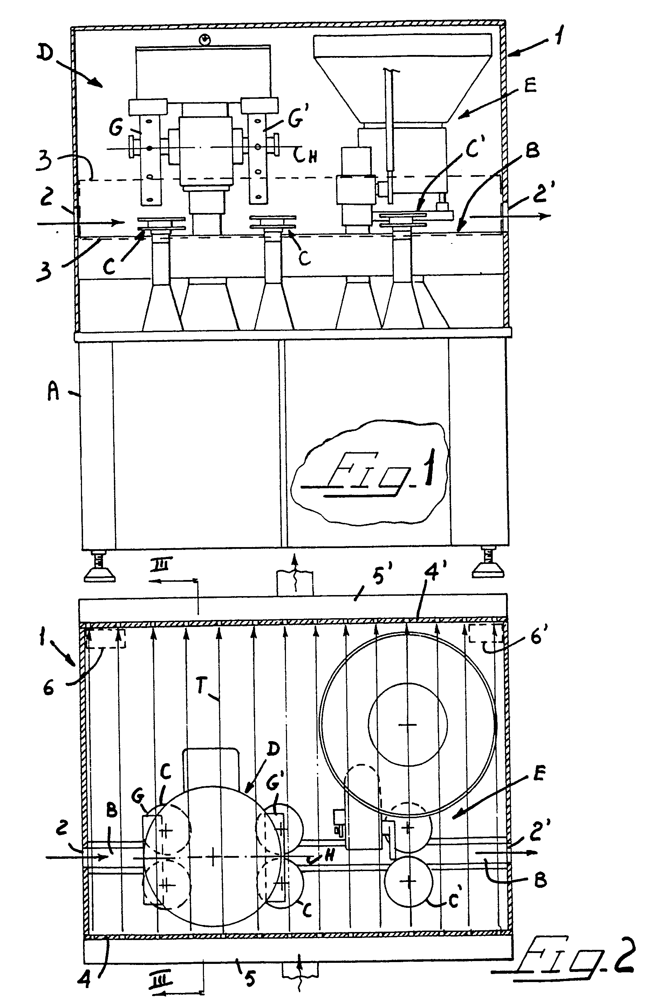

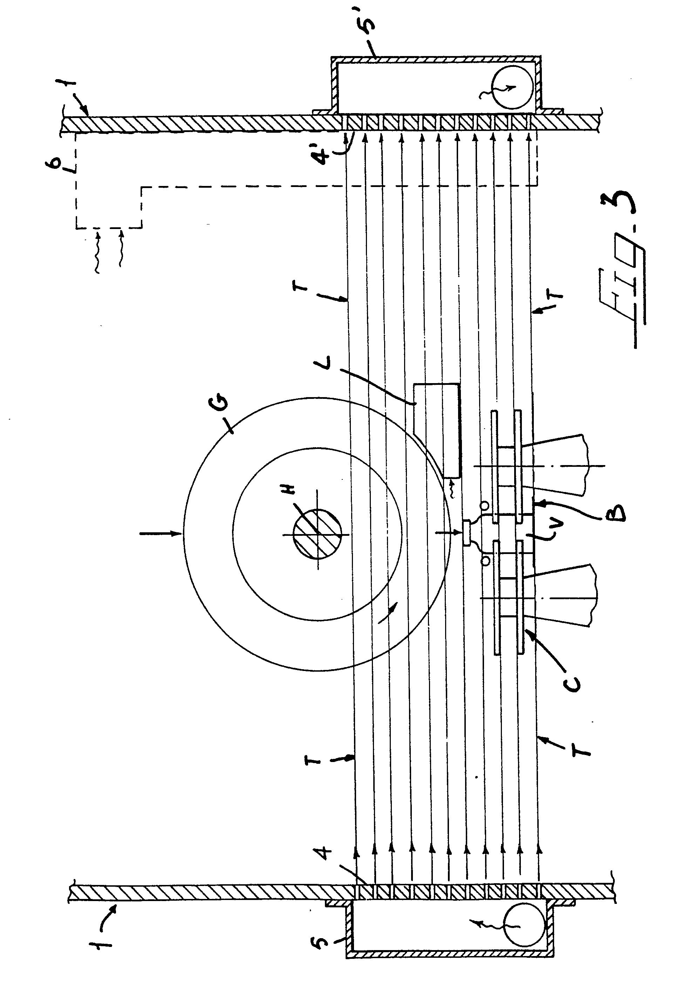

An in-line filling machine of a type suitable to achieve the object specified above will be now briefly described with reference to Figures 1 and 2. This machine comprises a cabinet-shaped base portion A accommodating all the moving members. A horizontal rectilinear conveyor B carries a single row of bottles which will be cyclically stopped by intercepting means C—C', first at a station D where the doses of pharmaceutical product are admitted thereinto, and then at a station E where the bottles are sealed. The station D comprises a plurality of similar rotary units G and G' having a combined dosing and dispensing function and being characterized in that they are mounted on a single driving shaft H which, in turn, is arranged parallel to the longitudinal axis of the conveyor B. It is apparent that in such a machine the plan-view area of the units G—G' above the conveyor B is minimized, thus reducing the amount of polluting particles liable to fall from said units onto the bottles.

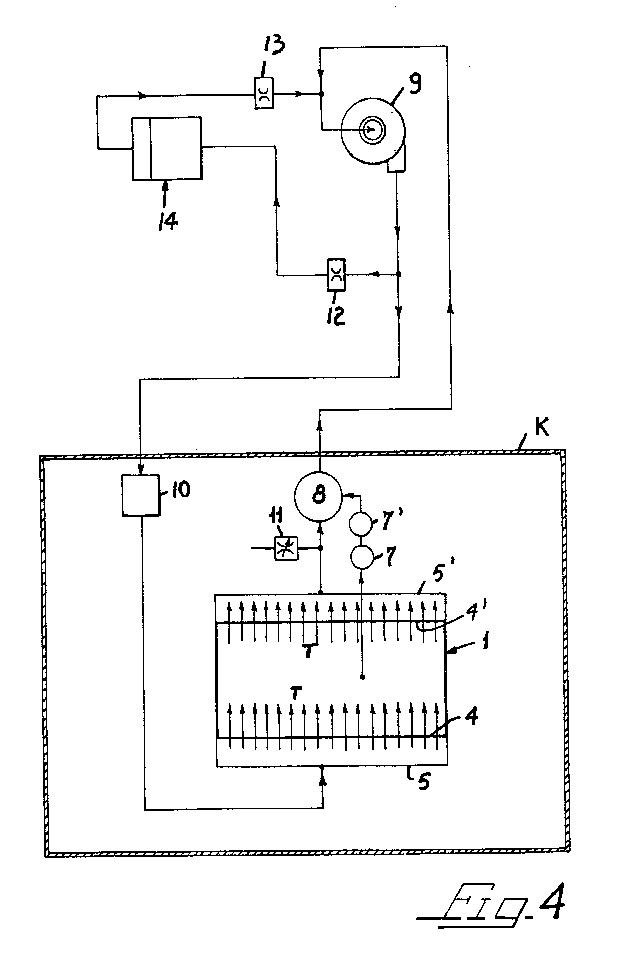

According to the invention, the in-line filling machine, preferably of the type mentioned above, is provided with a preferably transparent and parallelepipedal hood 1 which encloses all the operative elements of the machine and is provided with openings 2—2' in the front and rear walls, respectively, as inlet and outlet for the bottles carried on the conveyor B. The side walls of the hood 1 are preferably parallel to the imaginary plane containing the longitudinal axis of the conveyor B. A portion of these side walls of the hood, having an extension defined by the rectangle 3 shown with dot-and-dash lines in Figure 1, and having the same length as the side walls but a smaller height than said walls and being at the same level as the conveyor B and lower portions of the units G—G' is defined by perforated diffusion regions 4—4' forming a part of the manifolds 5—5' which are connected, respectively, to the outlet of a source of filtered and dehumidified air having suitable pressure and flowrate characteristics, and to a suction source of suitable characteristics (see below). The holes or perforations in the regions 4 and 4' are preferably of the same size, are located on parallel and equally spaced rows and are in line with one another, the arrangement being such that, also by virtue of a suitable balance between the inlet into and outlet from the manifolds 5—5', the portion of space in the hood which is defined by the perforated regions 4—4' will be traversed by a horizontal air stream T, in the form of a laminar flow, which will lap the bottles V perpendicularly (see Figure 3), and will submit them to a thorough and continuous scavenging action preventing any polluting particle from falling thereinto. The particular arrangement of the dosing and filling units G—G', as described with reference to Figures 1 and 2, is such that these units will be lapped transversely by the stream T and will present their rounded portion to said stream, thus avoiding the formation of vortexes at the mouths of the bottles, where continuous and linear characteristics are to be ensured to the stream T. As shown in Figure 2, the conveyor B is located close to the wall 4 of the manifold 5, so that the bottles will be hit almost immediately by the scavenging air issuing from said manifold, thus ensuring a very efficient scavenging action.

By limiting the action of the scavenging flow T to a fraction of the height dimension of the space enclosed by the hood 1, the following advantages are obtained:

— first of all, simple and economical construction of the apparatus;

— the spaces above and below the scavenging stream T are occupied by components of the machine some of which have considerable dimensions. Should these components be also lapped by the air stream, vortexes could be created that would certainly affect the evenness of the flow T;

— a slightly reduced pressure (vacuum) can be created, at least in the upper portion of the scavenging flow T, for example by providing, at the ends of the side wall to which the suction manifold 5' is connected, conduits 6—6' communicating at the bottom with said manifold and at the top with the upper interior of the hood. This provision causes a slow ascending stream preventing any fall of polluting particles and permitting the conditioned air to reach also the uppermost regions in the hood, for example where the magazine of the product to be packaged is located.

As shown in Figure 3, the filling apparatus of the invention is provided with suction intakes L at the units G—G' to collect and expel the powder of the product being dispersed during the passage of a dosed amount from said units into said bottles. Since the units G—G' include components operating first by suction to form the doses of product and then by using compressed air either to expel said doses of product to be admitted into the bottles and to clean the dosing chambers, it is obvious that in order to ensure said condition of laminar flow for the scavenging stream T, the various pneumatic sources operating within the hood must be suitably balanced between each other.

With reference to Figure 4, there will be now described the components of the installation used to circulate and condition the scavenging flow T traversing the hood. The pneumatic circuits operating either by pressurization and de-pressurization on the units G—G' form part of an independent circuit of the machine. The suction intakes L of the units G—G', however, are connected to the inlet of cyclones 7—7' for recovering the product being discharged from said intakes, the outlet of said recovery cyclones being connected to the inlet of a high depuration filter (so-called "absolute" filter) 8 to which the manifold 5' is also connected. The outlet of the filter 8 is connected to the suction mouth of a suitable electrically-operated blower 9 the outlet of which is connected to the manifold 5 through an absolute filter 10. The components 7, 7', 8 and 10 are preferably arranged within the sterile room K wherein the filling machine is located, and wherein a throttle 11 opens that is branched at the inlet of the filter 8 and permits to create in the hood 1 such an overpressure as to cause a continuous outflow of air from the openings 2—2' through which the bottles pass and to prevent any particles in the outer environment from entering the hood even in the case that a lid thereof is opened. Branched across the blower 9, through diaphragms 12, 13 of suitable characteristics, is the composite air dehumidifying unit 14. Such an arrangement of the unit 14 permits the latter to operate with the maximum efficiency at all times and avoids any perturbation or limitation in the main pneumatic circuit connected to the hood 1.

It is to be understood that the constructional details of the manifolds 5—5' have been omitted in this description, the latter being provided with internal baffles and other provisions to maintain the pressure of the air flowing out and into the holes, respectively, of the diffusion regions 4—4' as constant as possible. The description has also been omitted of the details concerning the pressure and flowrate values of the air outflowing from the diffusers 4—4', because they are easily obtainable by those skilled in the art through experimental tests, and because these values may vary as a function of the size and volume of the space enclosed by the hood 1.

## Claims

1. An apparatus for filling automatically and in a sterile environment, bottles or other containers with a pharmaceutical product or the like, comprising: an in-line machine wherein the bottles (V) are moved in a single row on a rectilinear path of travel (B) along which they are stopped cyclically by suitable means (C—C'), firstly at one or more stations (D) for admitting doses of product thereinto and subsequently at least at a sealing station (E), said stations for forming and dispensing the doses of product being preferably of rotary type and having an axis (H) which is parallel to the longitudinal axis of the path of travel of the bottles; a preferably parallelepipedal transparent hood (1) with side walls which are vertical and parallel to the imaginary plane containing the longitudinal axis of the conveyor for the bottles, said hood being formed with inlet and outlet openings (2—2') for the bottles in the front and rear walls thereof, respectively, and being provided on the side walls thereof with manifolds (5—5') including perforated diffusion surfaces (4—4') co-extensive with the entire length of said walls, characterized by the fact that one of said manifolds (5) is connected to a source for admitting suitably purified and de-humidified air into the hood, and the other (5') is connected to a suction source of such characteristics whereby the interior of the hood shall be traversed by an air stream (T) having a laminar flow that hits the bottles (V) perpendicularly and submits them to a thorough and continuous scavenging action to prevent any undesired particle from falling thereinto.

2. An apparatus according to claim 1, characterized in that the suction and delivery manifolds (5—5') are connected to a closed circuit including an electrically-operated blower (9) of suitable characteristics including absolute filters (8, 10) upstream and downstream of said blower; the suction stretch of said circuit, immediately downstream of the manifold connected to said hood, having branched thereon an adjustable throttle (11) which opens into the sterile room wherein said filling machine and absolute filters are located, the arrangement being such that by operating the said throttle (11) an overpressure can be formed in the hood of such characteristics whereby no particle from the outer environment is allowed to enter said hood.

3. An apparatus according to claim 2, characterized in that connected across the blower (9), in the main pneumatic circuit for the hood, through calibrated or calibratable nozzles, there is a circuit (12, 13, 14) with means for de-humidifying the air to be admitted into the hood.

4. An apparatus according to claim 2, characterized in that connected at the inlet of the filter (8), on the suction side of the blower (9) there are cyclones (7, 7'), having operatively connected thereto the intakes operating in proximity of the units for metering and dispensing the doses of product on the filling machine.

5. An apparatus according to claim 1, characterized in that the delivery and suction manifolds (5, 5') connected to the hood are of a smaller height than the side walls of the hood and are positioned at such a level whereby the scavenging air stream (T) will sweep mainly and at least the bottles (V), or the upper portion of the bottles of any size utilized in the filling machine.

6. An apparatus according to claim 1, characterized in that at the ends of the side wall of said hood, to which the suction manifold (5') is connected, conduits (6, 6') are provided communicating at the bottom thereof with said manifold and at the top thereof with the upper portion of the space enclosed by the hood, the arrangement being such as to cause, above the scavenging stream (T) for the bottles, a gentle ascending stream preventing any fall of undesired particles and permitting the conditioned air to reach also the uppermost regions in the hood, for example where the magazine of the product to be packaged is located.

7. An apparatus according to claim 1, wherein the conveyor for the bottles is arranged as near as possible to the diffusion wall (4) of the manifold (5) delivering the scavenging air, whereby the scavenging action on the bottles will have the maximum efficiency.

## Patentansprüche

1. Vorrichtung zum selbsttätigen und sterilen Abfüllen von Flaschen und dergleichen Behältern mit einem pharamazeutischen Produkt oder dergleichen mit einer In-line-Abfüllmaschine, in der die Flaschen (V) in einer einzigen Reihe längs eines geraden Weges (B) bewegt werden, wobei sie durch geeignete Mittel (C—C') zyklisch angehalten werden, und zwar zunächst an einer oder mehreren Stationen (D) zum Befüllen und anschließend an wenigstens einer Abdichtstation (E), wobei die Stationen zum Formen und Abgeben der Produktdosen vorzugsweise vom Drehtyp sind und eine Achse (H) haben, die sich parallel zur Längsachse des Transportwegs der Flaschen erstreckt, ferner mit einer vorzugsweise parallelepipedalen, transparenten Haube (1) mit vertikalen Seitenwänden, die sich parallel zu einer gedachten Ebene erstrecken, die die Längsachse des Förderers für die Flaschen enthält, wobei die Haube Einlaß- und Auslaßöffnungen (2—2') für die Flaschen in ihrer vorderwand bzw. Rückwand hat und an den Seiten mit Leitungen (5—5') versehen ist einschließlich perforierter Diffusionsflächen (4—4'), die sich über die gesamte Länge der Wände erstrecken, dadurch gekennzeichnet, daß eine der Leitungen (5) mit einer Quelle zum Einleiten von geeignet gereinigter und entfeuchteter Luft in die Haube verbunden ist und die andere Leitung (5') mit einer Saugquelle verbunden ist derart, daß das Innere der Haube von einem Luftstrom (T) durchquert wird, der eine Laminarströmung hat, die die Flaschen (V) rechtwinklig trifft und sie gründlich und fortwährend spült, um zu verhindern, daß unerwünschte Teilchen hineinfallen.

2. Vorrichtung nach Anspruch 1, dadurch gekennzeichnet, daß die Ansaug- und Auslaßverteilerleitungen (5—5') mit einem geschlossenen Kreis verbunden sind einschließlich eines
elektrisch betriebenen Lüfters (9) mit geeigneten
Eigenschaften mit stromauf und stromab des
Lüfters gelegenen absoluten Filtern (8, 10); wobei
der Saugabschnitt des Kreises, der unmittelbar
stromab der Verteilerleitung mit der Haube verbunden ist, darauf verzweigt eine einstellbare
Drossel (11) hat, die in den sterilen Raum öffnet,
in dem die Abfüllmaschine und die absoluten
Filter untergebracht sind und daß die Anordnung
derart vorgesehen ist, daß durch Betätigung der
Drossel (11) ein solcher Überdruck in der Haube
hergestellt werden kann, daß kein Teilchen aus
der äußeren Umgebung in die Haube eintreten
kann.

3. Vorrichtung nach Anspruch 2, dadurch
gekennzeichnet, daß quer zum Lüfter (9) ein Kreis
(12, 13, 14) in der pneumatischen Hauptschaltung
für die Haube vorgesehen ist, und zwar über
kalibrierte oder kalibrierbare Düsen mit einem
Mittel zum Entfeuchten der in die Haube eintretenden Luft.

4. Vorrichtung nach Anspruch 2, dadurch
gekennzeichnet, daß am Einlaß des Filters (8) an
der Saugseite des Lüfters (9) Zyklone (7, 7')
vorgesehen sind, die mit den Einlässen verbunden sind, die in der Nähe der Einheiten zum
Messen und zur Abgabe der Dosierungen des
Produkts an die Abfüllmaschine betrieben
werden.

5. Vorrichtung nach Anspruch 1, dadurch
gekennzeichnet, daß die mit der Haube verbundenen Auslaß- und Ansaugverteilerleitungen
(5, 5') eine geringere Höhe haben als die Seitenwände der Haube und auf einer solchen Höhe
angebracht sind, daß die Spülluft (T) hauptsächlich und wenigstens die Flaschen (V) oder den
oberen Teil der in jeder Größe in der Abfüllmaschine verwendeten Flaschen überstreicht.

6. Vorrichtung nach Anspruch 1, dadurch
gekennzeichnet, daß an den Enden der Seitenwand der Haube, mit der die Ansaugverteilerleitung (5') verbunden ist, Leitungen (6, 6') vorgesehen sind, die an ihrem Boden mit der Verteilerleitung und an ihrer Oberseite mit dem oberen
Teil des von der Haube eingeschlossenen Raums
in Verbindung stehen, um über dem Luftstrom (T)
für die Flaschen einen leicht ansteigenden Strom
hervorzurufen, um den Einfall unterwünschter
Teilchen zu verhindern und zu bewirken, daß die
konditionierte Luft auch die obersten Bereiche der
Haube erreicht, beispielsweise wo sich das Magazin für das zu verpackende Produkt befindet.

7. Vorrichtung nach Anspruch 1, dadurch
gekennzeichnet, daß der Förderer für die Flaschen
so nah wie möglich an der Diffusionswand (4) der
Verteilerleitung (5) angeordnet ist, die die Spülluft
abgibt, wodurch der Spülvorgang an den Flaschen den besten Wirkungsgrad hat.

**Revendications**

1. Un appareil pour emplir automatiquement et dans un environnement stérile des bouteilles ou
d'autres récipients, avec un produit pharmaceutique ou similaire, comprenant: une machine
du type en ligne dans laquelle les bouteilles (V)
sont déplacées en une seule file sur un chemin de
déplacement rectiligne (B) le long duquel elles
sont arrêtées de manière cyclique par des
moyens appropriés (C—C'), premièrement à un
ou plusieurs postes (D) pour recevoir des doses
de produit, et ensuite à au moins un poste de
bouchage (E), les postes destinés à former et à
distribuer les doses de produit étant de préférence du type rotatif et ayant un axe (H) qui est
parallèle à l'axe longitudinal du chemin de
déplacement des bouteilles; une hotte transparente (1) de préférence parallélépipédique,
avec des parois latérales qui sont verticales et
parallèles au plan imaginaire contenant l'axe
longitudinal du convoyeur pour les bouteilles,
cette hotte comportant des ouvertures d'entrée et
de sortie (2—2') pour les bouteilles, formées
respectivement dans ses parois avant et arrière,
tandis que ses parois latérales sont équipées de
collecteurs (5—5') comprenant des surfaces de
diffusion perforées (4—4') qui s'étendent sur
toute la longueur des parois, caractérisé par le fait
que l'un des collecteurs (5) est relié à une source
permettant d'introduire dans la hotte de l'air
purifié et déshumidifié de façon appropriée, tandis que l'autre (5') est relié à une source de
dépression ayant des caractéristiques telles que
l'intérieur de la hotte soit traversé par un écoulement d'air (T) de type laminaire qui rencontre les
bouteilles (V) dans une direction perpendiculaire
et les soumet à une action de nettoyage complète
et continue, pour éviter que des particules indésirables ne tombent dans ces bouteilles.

2. Un appareil selon la revendication 1, caractérisé en ce que les collecteurs d'aspiration et
d'admission (5—5') sont reliés à un circuit fermé
comprenant un ventilateur (9) actionné élec-
triquement, ayant des caractéristiques appro-
priées, avec des filtres absolus (8, 10) en amont et
en aval de ce ventilateur; et une restriction réglable (11) qui s'ouvre dans la chambre stérile dans
laquelle se trouvent la machine de remplissage et
les filtres absolus, est branchée dans la branche
d'aspiration du circuit, immédiatement en aval du
collecteur qui est relié à la hotte, la configuration
étant telle que la manoeuvre de la restriction (11)
permet de former dans la hotte une supression
ayant des caractéristiques telles qu'aucune particule provenant de l'environnement extérieur ne
peut entrer dans la hotte.

3. Un appareil selon la revendication 2, caractérisé en ce qu'un circuit (12, 13, 14), comportant
des moyens destinés à déshumidifier l'air à
admettre dans la hotte, est branché en parallèle
sur le ventilateur (9), dans le circuit pneumatique
principal pour la hotte, par l'intermédiaire de
buses qui sont étalonnées ou qui peuvent l'être.

4. Un appareil selon la revendication 2, caractérisé en ce que des cyclones (7, 7') sont branchés
à l'entrée du filtre (8), du côté d'aspiration du
ventilateur (9), et les prises d'air des unités destinées à doser et à distribuer les doses de produit de la machine de remplissage, qui se trouvent à proximité, sont reliées fonctionnellement à ces cyclones.

5. Appareil selon la revendication 1, caractérisé en ce que les collecteurs d'admission et d'aspiration (5, 5') branchés à la hotte ont une hauteur inférieure à celle des parois latérales de la hotte et sont placés à un niveau tel que l'écoulement d'air de nettoyage (T) balaie au moins et essentiellement les bouteilles (V) ou la partie supérieure des bouteilles de taille quelconque qui sont utilisées dans la machine de remplissage.

6. Un appareil selon la revendication 1, caractérisé en ce que des conduits (6, 6') sont établis aux extrémités de la paroi latérale de la hotte à laquelle est branché le collecteur d'aspiration (5'), ces conduits communiquant à leur partie inférieure avec le collecteur et à leur partie supérieure avec la partie supérieure de l'espace délimité par la hotte, la configuration étant conçue de façon à créer, au-dessus de l'écoulement de nettoyage (T) pour les bouteilles, un écoulement ascendant modéré qui empêche toute chute de particules indésirables et permet à l'air traité d'atteindre également les régions les plus élevées de la hotte, comme par exemple celle où se trouve le réservoir du produit à conditionner.

7. Un appareil selon la revendication 1, dans lequel le convoyeur pour les bouteilles est disposé aussi près que possible de la paroi de diffusion (4) du collecteur (5) qui fournit l'air de nettoyage, ce qui assure l'efficacité maximale de l'action de nettoyage des bouteilles.

Fig.1

Fig.2

Fig. 3

0 096 336

_Fig.4_